# EUROPÄISCHE PATENTSCHRIFT

(11) **EP 3 070 348 B1**
(45) Veröffentlichungstag und Bekanntmachung des Hinweises auf die Patenterteilung: **08.05.2019**
(21) Anmeldenummer: 15159886.9
(22) Anmeldetag: 19.03.2015
(51) Int. Cl.: F16C 3/02, B60K 17/22

(54) **ANTRIEBSWELLE FÜR KRAFTFAHRZEUGE UND VERFAHREN ZUR HERSTELLUNG EINER DERARTIGEN ANTRIEBSWELLE**
DRIVE SHAFT FOR MOTOR VEHICLES AND METHOD FOR PRODUCING SUCH A DRIVE SHAFT
ARBRE D'ENTRAÎNEMENT POUR VÉHICULES AUTOMOBILES ET PROCÉDÉ DE FABRICATION D'UN TEL ARBRE D'ENTRAÎNEMENT

(43) Veröffentlichungstag der Anmeldung: 21.09.2016
(73) Patentinhaber: Felss Rotaform GmbH, 75015 Bretten-Gölshausen (DE); IFA-Technologies GmbH, 39340 Haldensleben (DE)
(72) Erfinder: MORLOCK, Eckhard, 75203 Königsbach-Stein (DE); HÄRTER, Andreas, 75223 Niefern-Öschelbronn (DE); LANGER, Gerald, 39345 Bülstringen (DE)
(74) Vertreter: Kohler Schmid Möbus Patentanwälte

(56) Entgegenhaltungen:
- EP-A1- 0 557 733
- WO-A1-2005/018974
- DE-B3-102004 005 096
- GB-A- 2 358 902
- US-A- 3 599 757

## Beschreibung

Die Erfindung betrifft eine Antriebswelle für Kraftfahrzeuge gemäß dem Oberbegriff des Anspruchs 1, mit in Längsrichtung der Antriebswelle aufeinander folgenden Wellenabschnitten, von denen ein Wellenabschnitt als rohrartiger Wellenabschnitt größeren Querschnitts und ein weiterer Wellenabschnitt als Wellenabschnitt kleineren Querschnitts ausgebildet ist,
- wobei bei einem Ausgangszustand der Antriebswelle der Wellenabschnitt größeren Querschnitts an der einen Seite und der Wellenabschnitt kleineren Querschnitts an der anderen Seite eines ringartigen Übergangsbereichs der Antriebswelle angeordnet sind und der Übergangsbereich eine den Wellenabschnitt größeren Querschnitts und den Wellenabschnitt kleineren Querschnitts miteinander verbindende Bereichswand aufweist,
- wobei unter der Wirkung einer in Längsrichtung der Antriebswelle auf den Wellenabschnitt größeren Querschnitts und/oder auf den Wellenabschnitt kleineren Querschnitts wirkenden und die Antriebswelle ausgehend von dem Ausgangszustand stauchenden Längskraft der Wellenabschnitt größeren Querschnitts und der Wellenabschnitt kleineren Querschnitts in Längsrichtung der Antriebswelle relativ zueinander bewegbar sind und die Bereichswand des Übergangsbereichs zwischen dem Wellenabschnitt größeren Querschnitts und dem Wellenabschnitt kleineren Querschnitts eine Sollverformungs- und/oder eine Sollbruchstelle ausbildet,
- wobei der Wellenabschnitt kleineren Querschnitts eine bei Ausgangszustand der Antriebswelle außerhalb des Wellenabschnitts größeren Querschnitts angeordnete und sich in Längsrichtung der Antriebswelle erstreckende Einschublänge aufweist, mit welcher der Wellenabschnitt kleineren Querschnitts beim Stauchen der Antriebswelle unter Verformung und/oder Bruch der Bereichswand des zwischen dem Wellenabschnitt größeren Querschnitts und dem Wellenabschnitt kleineren Querschnitts angeordneten Übergangsbereichs in den Wellenabschnitt größeren Querschnitts einschiebbar ist und
- wobei der Wellenabschnitt kleineren Querschnitts bei der beim Stauchen der Antriebswelle ausgeführten Relativbewegung des Wellenabschnitts größeren Querschnitts und des Wellenabschnitts kleineren Querschnitts im Inneren des Wellenabschnitts größeren Querschnitts in Bewegungsrichtung geführt ist.

Die Erfindung betrifft des Weiteren ein Verfahren zur Herstellung einer Antriebswelle für Kraftfahrzeuge gemäß dem Oberbegriff des Anspruchs 6, im Rahmen dessen ein plastisch verformbarer rohrartiger Wellenrohling unter Ausbildung eines Wellenabschnitts größeren Querschnitts, eines bei einem Ausgangszustand der Antriebswelle in Längsrichtung der Antriebswelle auf den Wellenabschnitt größeren Querschnitts folgenden Wellenabschnitts kleineren Querschnitts sowie eines zwischen dem Wellenabschnitt größeren Querschnitts und dem Wellenabschnitt kleineren Querschnitts vorgesehenen Übergangsbereichs umgeformt wird,
- wobei der Übergangsbereich mit einer den Wellenabschnitt größeren Querschnitts und den Wellenabschnitt kleineren Querschnitts miteinander verbindenden Bereichswand hergestellt wird, die unter der Wirkung einer in Längsrichtung der Antriebswelle auf den Wellenabschnitt größeren Querschnitts und/oder auf den Wellenabschnitt kleineren Querschnitts wirkenden und die Antriebswelle ausgehend von dem Ausgangszustand stauchenden Längskraft eine Sollverformungs- und/oder eine Sollbruchstelle ausbildet und
- wobei der Wellenabschnitt kleineren Querschnitts mit einer sich in Längsrichtung der Antriebswelle erstreckenden Einschublänge hergestellt wird, die bei Ausgangszustand der Antriebswelle außerhalb des Wellenabschnitts größeren Querschnitts angeordnet ist und mit welcher der Wellenabschnitt kleineren Querschnitts in den Wellenabschnitt größeren Querschnitts bei einer Bewegung einschiebbar ist, welche der Wellenabschnitt größeren Querschnitts und der Wellenabschnitt kleineren Querschnitts beim Stauchen der Antriebswelle unter Verformung und/oder Bruch der Bereichswand des zwischen dem Wellenabschnitt größeren Querschnitts und dem Wellenabschnitt kleineren Querschnitts angeordneten Übergangsbereichs in Längsrichtung der Antriebswelle relativ zueinander ausführen.

Kraftfahrzeuge, beispielsweise Personenkraftwagen, sind vielfach mit einer Antriebswelle der eingangs genannten Art ausgerüstet, die bei einem Crash unter der Wirkung einer crashbedingten axialen Überlast ein definiertes Stauchungsverhalten zeigen und auf diese Art und Weise Aufprallenergie in Verformungsenergie umwandeln und dadurch absorbieren.

Gattungsgemäßer Stand der Technik ist offenbart in GB 2 358 902 A. Diese Druckschrift offenbart eine Antriebswelle, die einen über ihre Länge abgestuften Durchmesser aufweist. In axialer Richtung beidseits eines zylindrischen Längenabschnitts großen Durchmessers ist jeweils ein zylindrischer Längenabschnitt kleineren Durchmessers angeordnet. Die zylindrischen Längenabschnitte kleineren Durchmessers gehen an ihren von dem zylindrischen Längenabschnitt großen Durchmessers abliegenden axialen Enden in noch weiter durchmesserreduzierte Endabschnitte über. Zwischen dem zylindrischen Längenabschnitt großen Durchmessers und dem einen zylindrischen Längenabschnitt kleineren Durchmessers ist ein konvexer Übergangsabschnitt vorgesehen. Ein konischer Übergangsabschnitt stellt die Verbindung zwischen dem zylindrischen Längenabschnitt großen Durchmessers und dem anderen zylindrischen Längenabschnitt kleineren Durchmessers her. Die beiden zylindrischen Längenabschnitte kleineren Durchmessers stimmen in ihrem Durchmesser überein. Im Falle eines Crashs wird der eine zylindrische Längenabschnitt kleineren Durchmessers in axialer Richtung in den zylindrischen Längenabschnitt großen Durchmessers eingeschoben. Die axiale Relativbewegung des zylindrischen Längenabschnitts kleineren Durchmessers und des zylindrischen Längenabschnitts großen Durchmessers endet zu einem Zeitpunkt, zu welchem der zylindrische Längenabschnitt kleineren Durchmessers erst mit einer Teillänge im Inneren des zylindrischen Längenabschnitts großen Durchmessers angeordnet ist.

Eine Antriebswelle ist außerdem bekannt aus DE 10 2004 005 096 B3. Diese Druckschrift offenbart eine Antriebswelle, die einen zylindrischen Rohrabschnitt größeren Durchmessers und einen zylindrischen Rohrabschnitt kleineren Durchmessers aufweist. Die beiden Rohrabschnitte folgen in Längsrichtung der Antriebswelle aufeinander und sind durch einen sich von dem Rohrabschnitt größeren Durchmessers zu dem Rohrabschnitt kleineren Durchmessers hin verjüngenden Übergangsabschnitt miteinander verbunden. Im Inneren der Rohrabschnitte ist von dem Rohrabschnitt größeren Durchmessers her ein Rohrstutzen mit einer Teillänge in den Rohrabschnitt kleineren Durchmessers eingeschoben. In dem Bereich ihrer gegenseitigen Überlappung sind der Rohrstutzen und der Rohrabschnitt kleineren Durchmessers mittels eines Presssitzes aneinander festgelegt, der insbesondere in axialer Richtung wirksam ist. Der im Inneren des Rohrabschnitts größeren Durchmessers angeordnete Teil des Rohrstutzens ist gegenüber der in den Rohrabschnitt kleineren Durchmessers eingeschobenen Teillänge des Rohrstutzens in radialer Richtung zu einem Hohlzylinder erweitert, dessen Außendurchmesser geringfügig kleiner ist als der Innendurchmesser des Rohrabschnittes größeren Durchmessers.

Unter der Wirkung einer unfallbedingten axialen Belastung der Antriebswelle wird diese gestaucht. Der Rohrabschnitt größeren Durchmessers und der Rohrabschnitt kleineren Durchmessers bewegen sich relativ zueinander in Längsrichtung der Antriebswelle, wobei der Rohrabschnitt kleineren Durchmessers in den Rohrabschnitt größeren Durchmessers eingeschoben wird. Der Übergangsabschnitt zwischen dem Rohrabschnitt größeren Durchmessers und dem Rohrabschnitt kleineren Durchmessers lässt die Relativbewegung der beiden Rohrabschnitte zu. Der Übergangsabschnitt wird beim Stauchen der Antriebswelle zunächst verformt und bricht schließlich, wobei eine die Wandstärke des Übergangsabschnitts reduzierende Sicke eine Sollbruchstelle ausbildet. Gemeinschaftlich mit dem Rohrabschnitt kleineren Durchmessers bewegt sich der mit dem Rohrabschnitt kleineren Durchmessers verpresste Rohrstutzen relativ zu dem Rohrabschnitt größeren Durchmessers. Der im Inneren des Rohrabschnitts größeren Durchmessers angeordnete Hohlzylinder des Rohrstutzens bewirkt dabei eine Führung des Rohrabschnitts kleineren Durchmessers in dem Rohrabschnitt größeren Durchmessers in Richtung der Relativbewegung und verhindert dadurch ein Ausknicken der Antriebswelle.

Ausgehend von dem gattungsgemäßen Stand der Technik besteht die Aufgabe der vorliegenden Erfindung darin, eine Antriebswelle der eingangs genannten Art bereitzustellen, an der bei einem Crash die Relativbewegung des Wellenabschnitts größeren Querschnitts und des Wellenabschnitts kleineren Querschnitts auch dann geführt ist, wenn die Wirkungslinie der crashbedingt auf die Antriebswelle wirkenden Längskraft nicht exakt in Längsrichtung der Antriebswelle verläuft.

Erfindungsgemäß gelöst wird diese Aufgabe durch die Antriebswelle gemäß Patentanspruch 1 und durch das Herstellungsverfahren gemäß Patentanspruch 6.

An der Antriebswelle gemäß Patentanspruch 1 wird bei einem Crash die gegenseitige Führung eines Wellenabschnitts größeren Querschnitts und eines Wellenabschnitts kleineren Querschnitts bei einer mit dem Stauchen der Antriebswelle einhergehenden Relativbewegung der beiden Wellenabschnitte unmittelbar von dem Wellenabschnitt kleineren Querschnitts übernommen, in den zu diesem Zweck eine Querschnittserweiterung eingeformt ist. Es bedarf somit zur gegenseitigen Führung des Wellenabschnitts größeren Querschnitts und des Wellenabschnitts kleineren Querschnitts im Crashfall keines die Antriebswelle konstruktiv und herstellungstechnisch verkomplizierenden Zusatzbauteils. Im Ausgangszustand, das heißt bei undeformierter Antriebswelle, liegt die im Crashfall als Führungsmittel dienende Querschnittserweiterung des Wellenabschnitts kleineren Querschnitts in Längsrichtung der Antriebswelle gesehen außerhalb des Wellenabschnitts größeren Querschnitts. Wird die Antriebswelle unter der Wirkung einer in Längsrichtung der Antriebswelle wirkenden Kraft gestaucht, so wird der Wellenabschnitt kleineren Querschnitts mit der Querschnittserweiterung in Längsrichtung der Antriebswelle in den Wellenabschnitt größeren Querschnitts eingeschoben. Die Querschnittserweiterung ist erfindungsgemäß gegenüber der Einschublänge des Wellenabschnitts kleineren Querschnitts längenreduziert. Der aufgrund des Querschnittsunterschieds in Querrichtung der Antriebswelle bestehende Abstand zwischen der Außenseite der Querschnittserweiterung der Teillänge des Wellenabschnitts kleineren Querschnitts und der Innenseite des Wellenabschnitts größeren Querschnitts ist derart bemessen, dass sich bei der Relativbewegung der beiden Wellenabschnitte die gewünschte Führungswirkung einstellt. Durch eine zweckmäßige Bemessung des Unterschieds zwischen dem Querschnitt des Wellenabschnitts größeren Querschnitts und dem Querschnitt der Querschnittserweiterung an der Teillänge des Wellenabschnitts kleineren Querschnitts kann eine begrenzte Kippbeweglichkeit des im Inneren des Wellenabschnitts größeren Querschnitts geführten Wellenabschnitts kleineren Querschnitts realisiert werden. Die begrenzte Kippbeweglichkeit des Wellenabschnitts kleineren Querschnitts ermöglicht eine geführte Relativbewegung des Wellenabschnitts größeren Querschnitts und des Wellenabschnitts kleineren Querschnitts auch in Fällen, in denen die Wirkungslinie der crashbedingt auf die Antriebswelle wirkenden Längskraft nicht exakt in Längsrichtung der Antriebswelle sondern unter einem spitzen Winkel gegen die Längsrichtung der Antriebswelle geneigt verläuft. Die Querschnittsform des Wellenabschnitts größeren Querschnitts und des Wellenabschnitts kleineren Querschnitts ist bevorzugtermaßen kreisrund, kann aber auch von der Kreisform abweichen.

Die Herstellung der erfindungsgemäßen Antriebswelle erfolgt ausgehend von einem als Halbzeug ohne weiteres verfügbaren rohrartigen Wellenrohling. Durch Umformen des plastisch verformbaren Wellenrohlings wird unter anderem der Wellenabschnitt kleineren Querschnitts erstellt, in welchen über eine Teillänge der Einschublänge des Wellenabschnitts kleineren Querschnitts die als Führungsmittel dienende Querschnittserweiterung eingeformt wird.

Besondere Ausführungsarten der Erfindung nach den unabhängigen Patentansprüchen 1 und 6 ergeben sich aus den abhängigen Patentansprüchen 2 bis 5 und 7 bis 9.

Grundsätzlich besteht erfindungsgemäß die Möglichkeit, dass der Wellenabschnitt kleineren Querschnitts der Antriebswelle aus vollem Material besteht. In bevorzugter Ausgestaltung der Erfindung ist ein Wellenabschnitt kleineren Querschnitts vorgesehen, der wenigstens in dem Bereich der Querschnittserweiterung der Einschublänge rohrartig ausgebildet ist und eine sich in Längsrichtung der Antriebswelle erstreckende Abschnittswand aufweist, in welche die Querschnittserweiterung der Einschublänge eingeformt ist (Patentanspruch 2). Insbesondere fertigungstechnisch hat ein wenigstens zum Teil rohrartiger Wellenabschnitt kleineren Querschnitts Vorteile gegenüber einem Wellenabschnitt aus vollem Material.

Im Rahmen des erfindungsgemäßen Verfahrens kann die Querschnittserweiterung der Einschublänge des Wellenabschnitts kleineren Querschnitts in einem gesonderten Arbeitsgang in den Wellenabschnitt kleineren Querschnitts eingeformt werden. Erfindungsgemäß bevorzugt wird eine zeitliche Parallelisierung der Erstellung der Querschnittserweiterung der Teillänge der Einschublänge des Wellenabschnitts kleineren Querschnitts mit der Herstellung anderer Teile der Antriebswelle. Gemäß Patentanspruch 7 wird die Querschnittserweiterung der Teillänge der Einschublänge des Wellenabschnitts kleineren Querschnitts gleichzeitig mit dem restlichen Wellenabschnitt kleineren Querschnitts und/oder gleichzeitig mit dem Übergangsbereich zwischen dem Wellenabschnitt größeren Querschnitts und dem Wellenabschnitt kleineren Querschnitts hergestellt.

In weiterer bevorzugter Ausgestaltung der Erfindung wird die Querschnittserweiterung der Teillänge der Einschublänge des Wellenabschnitts kleineren Querschnitts durch Rundkneten in die Einschublänge des Wellenabschnitts kleineren Querschnitts eingeformt (Patentanspruch 8).

Ein günstiges Verformungsverhalten der Bereichswand des Übergangsbereichs zwischen dem Wellenabschnitt größeren Querschnitts und dem Wellenabschnitt kleineren Querschnitts wird in weiterer Ausgestaltung der erfindungsgemäßen Antriebswelle dadurch erzielt, dass die Bereichswand bei Ausgangszustand der Antriebswelle zu dem Inneren der Antriebswelle hin gekrümmt ist (Patentanspruch 3).

Ausweislich Patentanspruch 9 wird die Bereichswand des Übergangsbereichs zwischen dem Wellenabschnitt größeren Querschnitts und dem Wellenabschnitt kleineren Querschnitts durch Rollieren des betreffenden Bereichs des rohrartigen Wellenrohlings hergestellt. Beim Rollieren handelt es sich um ein bewährtes Fertigungsverfahren, das eine definierte Gestaltung der Bereichswand, insbesondere eine Fertigung der Bereichswand mit einer den Erfordernissen entsprechenden Wanddicke, ermöglicht.

Durch eine besonders funktionssichere gegenseitige Führung des Wellenabschnitts größeren Querschnitts und des Wellenabschnitts kleineren Querschnitts zeichnet sich die in Patentanspruch 4 beschriebene Bauart der erfindungsgemäßen Antriebswelle aus. Der Wellenabschnitt größeren Querschnitts besitzt einen kreisrunden Querschnitt mit einem Innendurchmesser D, die Querschnittserweiterung der Einschublänge des Wellenabschnitts kleineren Querschnitts einen kreisrunden Querschnitt mit einem Außendurchmesser d. Das Verhältnis Außendurchmesser d der Querschnittserweiterung der Einschublänge des Wellenabschnitts kleineren Querschnitts zum Innendurchmesser D des Wellenabschnitts größeren Querschnitts beträgt wenigstens 0,715 und höchstens 0,958. Bei diesem Durchmesserverhältnis ergibt sich ein günstiges Führungsverhalten selbst dann, wenn die Längskraft, unter deren Wirkung die Antriebswelle im Crashfall gestaucht wird, nicht exakt axial wirksam ist sondern eine Wirkungslinie aufweist, die unter einem Winkel zu der Achse der Antriebswelle verläuft. Ein Verkanten des Wellenabschnitts kleineren Querschnitts im Inneren des Wellenabschnitts kleineren Querschnitts bei nicht exakt axialer Kraftbeaufschlagung der Antriebswelle wird vermieden.

Bei einer Kardanwelle, wie sie Gegenstand von Patentanspruch 5 ist, handelt es sich um eine besonders praxisrelevante Bauart der erfindungsgemäßen Antriebswelle.

Nachfolgend wird die Erfindung anhand beispielhafter schematischer Darstellungen näher erläutert. Es zeigen:
- Figur 1: eine für einen Personenkraftwagen vorgesehene Antriebswelle im Ausgangszustand,
- Figuren 2, 3: verschiedene Phasen der crashbedingten Verformung eines Übergangsbereichs zwischen einem Wellenabschnitt größeren Querschnitts und einem Wellenabschnitt kleineren Querschnitts der Antriebswelle gemäß Figur 1,
- Figur 4a: den Übergangsbereich zwischen dem Wellenabschnitt größeren Querschnitts und dem Wellenabschnitt kleineren Querschnitts der Antriebswelle gemäß den Figuren 1 bis 3 zum Zeitpunkt des Bruchs des Übergangsbereichs,
- Figur 4b: das Detail IVb in Figur 4a und
- Figur 5: die Antriebswelle gemäß den Figuren 1 bis 4b nach dem Bruch des Übergangsbereichs zwischen dem Wellenabschnitt größeren Querschnitts und dem Wellenabschnitt kleineren Querschnitts bei in den Wellenabschnitt größeren Querschnitts eingeschobenem Wellenabschnitt kleineren Querschnitts.

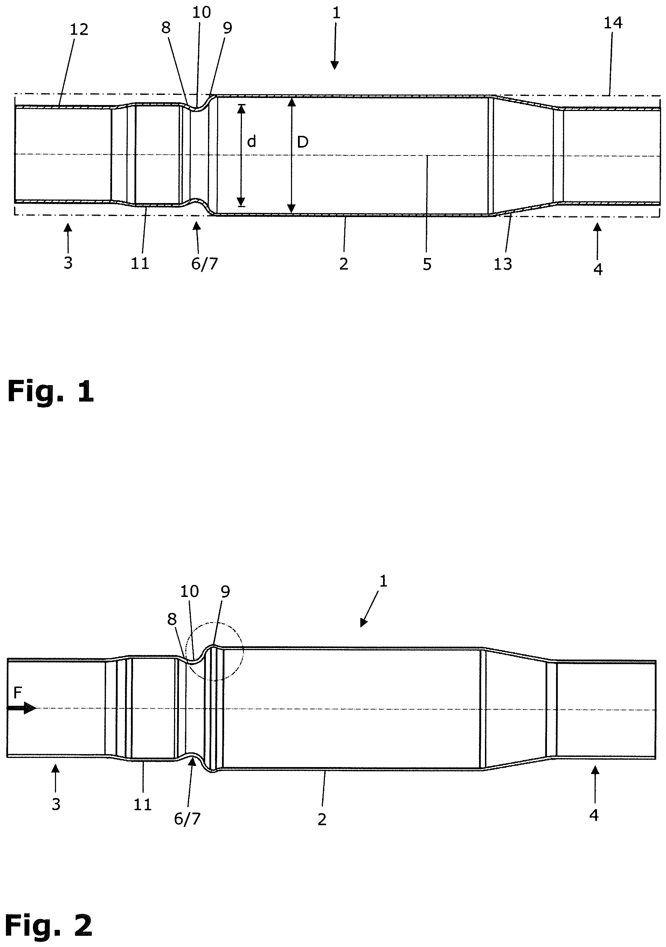

Gemäß Figur 1 umfasst eine als Kardanwelle 1 vorgesehene Antriebswelle eines Personenkraftwagens einen Wellenabschnitt 2 größeren Querschnitts sowie Wellenabschnitte 3, 4 kleineren Querschnitts. Sowohl der Wellenabschnitt 2 größeren Querschnitts als auch die Wellenabschnitte 3, 4 kleineren Querschnitts sind rohrartig ausgebildet und besitzen eine Abschnittswand mit kreisrunder Querschnittsform. Eine gemeinsame Achse 5 des Wellenabschnitts 2 größeren Querschnitts und der Wellenabschnitte 3, 4 kleineren Querschnitts bildet die Achse der Kardanwelle 1. Die an beiden Enden der Kardanwelle 1 vorzusehenden Gelenke sind in den Figuren der Übersichtlichkeit halber nicht gezeigt.

Zwischen dem Wellenabschnitt 2 größeren Querschnitts und dem Wellenabschnitt 3 kleineren Querschnitts ist ein ringartiger Übergangsbereich 6 mit einer Bereichswand 7 vorgesehen. Die Bereichswand 7 ist zu dem Inneren der Kardanwelle 1 hin gekrümmt und setzt sich aus konischen Wandabschnitten 8, 9 und einem diese verbindenden konkaven Wandabschnitt 10 zusammen.

An den konischen Wandabschnitt 8 des Übergangsbereichs 6 schließt sich eine hohlzylindrische Querschnittserweiterung 11 des Wellenabschnitts 3 kleineren Querschnitts an. Die Querschnittserweiterung 11 des Wellenabschnitts 3 kleineren Querschnitts besitzt einen Außendurchmesser d, der kleiner ist als ein Innendurchmesser D des Wellenabschnitts 2 größeren Querschnitts. Das Verhältnis d:D beträgt wenigstens 0,715 und höchstens 0,958.

Auf die Querschnittserweiterung 11 folgt in Längsrichtung der Kardanwelle 1 zu deren freiem Ende hin eine gegenüber der Querschnittserweiterung 11 durchmesserreduzierte Restlänge 12 des Wellenabschnitts 3 kleineren Querschnitts.

An der gegenüberliegenden Seite des Wellenabschnitts 2 größeren Querschnitts ist der Wellenabschnitt 4 kleineren Querschnitts über einen konischen Übergangsbereich 13 mit dem Wellenabschnitt 2 größeren Querschnitts verbunden.

In Figur 1 strichpunktiert angedeutet ist ein als Zylinderrohr ausgebildeter Wellenrohling 14, von dem ausgehend die Kardanwelle 1 gefertigt wird. Der Wellenrohling 14 besteht aus einem plastisch verformbaren metallischen Material, in dem dargestellten Bespielsfall aus Vergütungsstahl der Güte C22E. Die Wand des Wellenrohlings 14 besitzt eine Dicke von 1,5 mm, der Außendurchmesser des Wellenrohlings 14 beträgt 75 mm.

Zur Herstellung der Kardanwelle 1 wird der Wellenrohling 14 zunächst einer rollierenden Bearbeitung unterzogen. Durch Rollieren des betreffenden Bereichs des Wellenrohlings 14 wird der konkave Wandabschnitt 10 des späteren Übergangsbereichs 6 zwischen dem Wellenabschnitt 2 größeren Querschnitts und dem Wellenabschnitt 3 kleineren Querschnitts in die Wand des Wellenrohlings 14 eingeformt. Durch das Rollieren wird die Wanddicke des Wellenrohlings 14 im Bereich des konkaven Wandabschnitts 10 des späteren Übergangsbereichs 6 von 1,5 mm auf 1,3 mm reduziert.

Der auf diese Art und Weise bearbeitete Wellenrohling 14 wird in der nächsten Phase des Verfahrens zur Herstellung der Kardanwelle 1 im Vorschubverfahren rundgeknetet. Dabei wird der Durchmesser des Wellenrohlings 14 beidseits des späteren Wellenabschnitts 2 größeren Querschnitts jeweils mit einem konischen Übergangsbereich von 75 mm auf 60 mm reduziert. An dem in Figur 1 rechten Ende des Wellenrohlings 14 werden der Wellenabschnitt 4 kleineren Querschnitts und der konische Übergangsbereich 13 erstellt. An dem in Figur 1 linken Ende wird der Wellenrohling 14 zu einem durchmesserreduzierten Hohlzylinder und einem konischen Übergangsbereich mit den konischen Wandabschnitten 8, 10 und dem zwischen diesen angeordneten konkaven Wandabschnitt 10 umgeformt. Über diesen konischen Übergangsbereich ist der durchmesserreduzierte Hohlzylinder an den nun den Wellenabschnitt 2 größeren Querschnitts bildenden Abschnitt des Wellenrohlings 14 angebunden. Mit dem Wellenabschnitt 2 größeren Querschnitts bleibt ein Abschnitt des Wellenrohlings 14 in unbearbeiteter Form erhalten.

Der durchmesserreduzierte Hohlzylinder und der diesen mit dem Wellenabschnitt 2 größeren Querschnitts verbindende konische Übergangsbereich an der in Figur 1 linken Seite des Wellenabschnitts 2 größeren Querschnitts werden nun in einem weiteren Arbeitsgang durch Einstech-Rundkneten umgeformt. Von dem zuvor erstellten durchmesserreduzierten Hohlzylinder bleibt dabei die Restlänge 12 des Wellenabschnitts 3 kleineren Querschnitts erhalten. Der restliche durchmesserreduzierte Hohlzylinder wird zu der Querschnittserweiterung 11 umgeformt, dem konischen Übergangsbereich zwischen dem durchmesserreduzierten Hohlzylinder und dem Wellenabschnitt 2 größeren Querschnitts wird die aus Figur 1 ersichtliche Form aufgeprägt. Die Kardanwelle 1 liegt nun in dem Ausgangszustand gemäß Figur 1 vor.

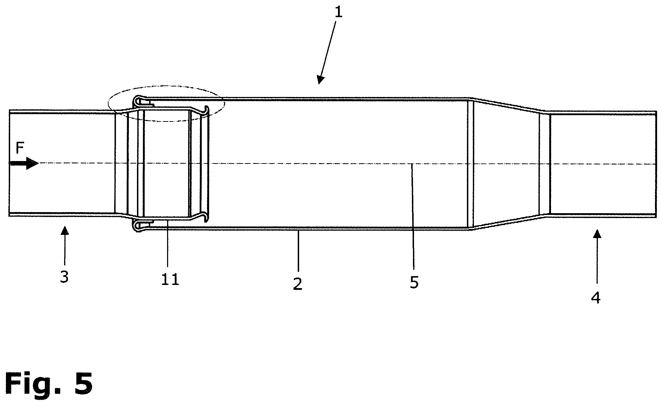

Das Verhalten der Kardanwelle 1 unter einer axialen Last, wie sie im Crashfall, beispielsweise bei einem Aufprall des mit der Kardanwelle 1 ausgerüsteten Personenkraftwagens auf ein Hindernis, auf die Kardanwelle 1 wirken kann, ist in den Figuren 2 bis 5 veranschaulicht.

Unter der Wirkung einer in Figur 2 angedeuteten und in Längsrichtung der Kardanwelle 1 wirkenden Längskraft F wird die Kardanwelle 1 gestaucht. Der Wellenabschnitt 2 größeren Querschnitts und der Wellenabschnitt 3 kleineren Querschnitts bewegen sich aufgrund der Längskraft F ausgehend von dem Ausgangszustand gemäß Figur 1 in Längsrichtung der Kardanwelle 1 gegenläufig zueinander hin.

In einer ersten Phase der Relativbewegung des Wellenabschnitts 2 größeren Querschnitts und des Wellenabschnitts 3 kleineren Querschnitts kommt es zu einer Verformung der Bereichswand 7 des zwischen dem Wellenabschnitt 2 größeren Querschnitts und dem Wellenquerschnitt 3 kleineren Querschnitts vorgesehenen Übergangsbereichs 6. Der konische Wandabschnitt 9 des Übergangsbereichs 6 wölbt sich dabei nach außen, der konkave Wandabschnitt 10 des Übergangsbereichs 6 bleibt zu dem Inneren der Kardanwelle 1 hin gekrümmt, der konische Wandabschnitt 8 des Übergangsbereichs 6 behält seine ursprüngliche Ausrichtung gegenüber der Querschnittserweiterung 11 des Wellenabschnitts 3 kleineren Querschnitts im Wesentlichen bei. Es ergeben sich damit die Verhältnisse gemäß Figur 2.

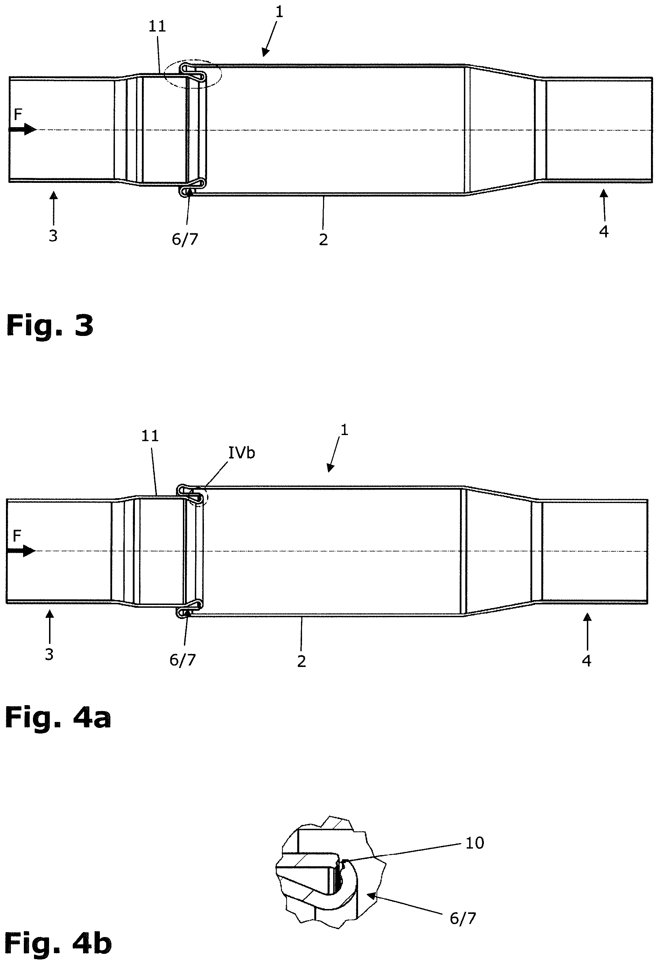

Bei fortgesetzter Relativbewegung des Wellenabschnitts 2 größeren Querschnitts und des Wellenabschnitts 3 kleineren Querschnitts wird der Wellenabschnitt 3 kleineren Querschnitts unter der Wirkung der Längskraft F in den Wellenabschnitt 2 größeren Querschnitts eingeschoben. Damit einher geht eine S-förmige Faltung der Bereichswand 7 des Übergangsbereichs 6 zwischen dem Wellenabschnitt 2 größeren Querschnitts und dem Wellenabschnitt 3 kleineren Querschnitts. Der Wellenabschnitt 2 größeren Querschnitts stülpt sich über den Wellenabschnitt 3 kleineren Querschnitts, der mit dem vorauseilenden Ende der Querschnittserweiterung 11 zunächst geringfügig mit dem Wellenabschnitt 2 größeren Querschnitts in Längsrichtung der Kardanwelle 1 überlappt (Figur 3).

Infolge der Relativbewegung des Wellenabschnitts 2 größeren Querschnitts und des Wellenabschnitts 3 kleineren Querschnitts in Längsrichtung der Kardanwelle 1 kommt es schließlich zum Bruch der Bereichswand 7 des Übergangsbereichs 6 (Figuren 4a, 4b). Die (Soll-)Bruchstelle liegt dabei in dem Bereich des wanddickenreduzierten konkaven Wandabschnitts 10 des Übergangsbereichs 6.

Durch die Verformung des Bereichswand 7 des Übergangsbereichs 6 zwischen dem Wellenabschnitt 2 größeren Querschnitts und dem Wellenabschnitt 3 kleineren Querschnitts bis zum Erreichen der Bruchgrenze wird crashbedingte Aufprallenergie in Verformungsenergie umgewandelt und dadurch von der Kardanwelle 1 absorbiert.

Nach dem Bruch der Bereichswand 7 des Übergangsbereichs 6 wird der Wellenabschnitt 3 kleineren Querschnitts über seine als Einschublänge fungierende Gesamtlänge entlang der Achse 5 der Kardanwelle 1 in das Innere des Wellenabschnitts 2 größeren Querschnitts eingeschoben. Bei dieser Einschubbewegung wird der Wellenabschnitt 3 kleineren Querschnitts mittels der sich über eine Teillänge der Einschublänge erstreckenden Querschnittserweiterung 11 an der Innenseite des Wellenabschnitts 2 größeren Querschnitts geführt. Aufgrund des Übermaßes des Innendurchmessers D des Wellenabschnitts 2 größeren Querschnitts gegenüber dem Außendurchmesser d der Querschnittserweiterung 11 des Wellenabschnitts 3 kleineren Querschnitts kann sich dabei der Wellenabschnitt 3 kleineren Querschnitts zwar in einem geringen Maße schräg stellen, das heißt sich unter einem kleinen spitzen Winkel gegen die Achse 5 der Kardanwelle 1 ausrichten; die mögliche Schrägstellung des Wellenabschnitts 3 kleineren Querschnitts ist aufgrund des gewählten Durchmesserverhältnisses d:D aber begrenzt und behindert folglich ein vollständiges Einschieben des Wellenabschnitts 3 kleineren Querschnitts in den Wellenabschnitt 2 größeren Querschnitts nicht. Es ergibt sich vielmehr eine Führung des Wellenabschnitts 3 kleineren Querschnitts mit Spiel in Querrichtung der Achse 5 der Kardanwelle 1, wenn der Wellenabschnitt 3 kleineren Querschnitts über seine Einschublänge, in dem dargestellten Beispielsfall über seine gesamte Länge, in das Innere des Wellenabschnitts 2 größeren Querschnitts eingeschoben wird.

## Patentansprüche

1. Antriebswelle für Kraftfahrzeuge, mit in Längsrichtung der Antriebswelle aufeinander folgenden Wellenabschnitten, von denen ein Wellenabschnitt als rohrartiger Wellenabschnitt (2) größeren Querschnitts und ein weiterer Wellenabschnitt als Wellenabschnitt (3) kleineren Querschnitts ausgebildet ist,
• wobei bei einem Ausgangszustand der Antriebswelle der Wellenabschnitt (2) größeren Querschnitts an der einen Seite und der Wellenabschnitt (3) kleineren Querschnitts an der anderen Seite eines ringartigen Übergangsbereichs (6) der Antriebswelle angeordnet sind und der Übergangsbereich (6) eine den Wellenabschnitt (2) größeren Querschnitts und den Wellenabschnitt (3) kleineren Querschnitts miteinander verbindende Bereichswand (7) aufweist,
• wobei unter der Wirkung einer in Längsrichtung der Antriebswelle auf den Wellenabschnitt (2) größeren Querschnitts und/oder auf den Wellenabschnitt (3) kleineren Querschnitts wirkenden und die Antriebswelle ausgehend von dem Ausgangszustand stauchenden Längskraft der Wellenabschnitt (2) größeren Querschnitts und der Wellenabschnitt (3) kleineren Querschnitts in Längsrichtung der Antriebswelle relativ zueinander bewegbar sind und die Bereichswand (7) des Übergangsbereichs (6) zwischen dem Wellenabschnitt (2) größeren Querschnitts und dem Wellenabschnitt (3) kleineren Querschnitts eine Sollverformungs- und/oder eine Sollbruchstelle ausbildet,
• wobei der Wellenabschnitt (3) kleineren Querschnitts eine bei Ausgangszustand der Antriebswelle außerhalb des Wellenabschnitts (2) größeren Querschnitts angeordnete und sich in Längsrichtung der Antriebswelle erstreckende Einschublänge aufweist, mit welcher der Wellenabschnitt (3) kleineren Querschnitts beim Stauchen der Antriebswelle unter Verformung und/oder Bruch der Bereichswand (7) des zwischen dem Wellenabschnitt (2) größeren Querschnitts und dem Wellenabschnitt (3) kleineren Querschnitts angeordneten Übergangsbereichs (6) in den Wellenabschnitt (2) größeren Querschnitts einschiebbar ist,
**dadurch gekennzeichnet, dass** die Einschublänge des Wellenabschnitts (3) kleineren Querschnitts über eine Teillänge der Einschublänge mit einer in den Wellenabschnitt (3) kleineren Querschnitts eingeformten Querschnittserweiterung (11) versehen ist, deren Querschnitt größer ist als der Querschnitt einer Restlänge (12) der Einschublänge des Wellenabschnitts (3) kleineren Querschnitts, die sich bei Ausgangszustand der Antriebswelle an der von dem Wellenabschnitt (2) größeren Querschnitts abliegenden Seite der Querschnittserweiterung (11) in Längsrichtung der Antriebswelle erstreckt, wobei der Wellenabschnitt (3) kleineren Querschnitts bei der beim Stauchen der Antriebswelle ausgeführten Relativbewegung des Wellenabschnitts (2) größeren Querschnitts und des Wellenabschnitts (3) kleineren Querschnitts mittels der über die Teillänge der Einschublänge in den Wellenabschnitt (3) kleineren Querschnitts eingeformten Querschnittserweiterung (11) im Inneren des Wellenabschnitts (2) größeren Querschnitts in Bewegungsrichtung geführt ist.

2. Antriebswelle nach Anspruch 1, **dadurch gekennzeichnet, dass** der Wellenabschnitt (3) kleineren Querschnitts wenigstens in dem Bereich der Querschnittserweiterung (11) der Einschublänge rohrartig ausgebildet ist und eine sich in Längsrichtung der Antriebswelle erstreckende Abschnittswand aufweist, in welche die Querschnittserweiterung (11) der Einschublänge des Wellenabschnitts (3) kleineren Querschnitts eingeformt ist.

3. Antriebswelle nach einem der vorhergehenden Ansprüche, **dadurch gekennzeichnet, dass** die Bereichswand (7) des Übergangsbereichs (6) zwischen dem Wellenabschnitt (2) größeren Querschnitts und dem Wellenabschnitt (3) kleineren Querschnitts bei Ausgangszustand der Antriebswelle zu dem Inneren der Antriebswelle hin gekrümmt ist.

4. Antriebswelle nach einem der vorhergehenden Ansprüche, **dadurch gekennzeichnet, dass** der Wellenabschnitt (2) größeren Querschnitts einen kreisrunden Querschnitt mit einem Innendurchmesser (D) und die Querschnittserweiterung (11) der Einschublänge des Wellenabschnitts (3) kleineren Querschnitts einen kreisrunden Querschnitt mit einem Außendurchmesser (d) aufweisen und dass das Verhältnis Außendurchmesser (d) der Querschnittserweiterung (11) der Einschublänge des Wellenabschnitts (3) kleineren Querschnitts zum Innendurchmesser (D) des Wellenabschnitts (2) größeren Querschnitts wenigstens 0,715 und höchstens 0,958 beträgt.

5. Antriebswelle nach einem der vorhergehenden Ansprüche, **dadurch gekennzeichnet, dass** die Antriebswelle als Gelenkwelle, insbesondere als Kardanwelle (1), ausgebildet ist.

6. Verfahren zur Herstellung einer Antriebswelle für Kraftfahrzeuge, im Rahmen dessen ein plastisch verformbarer rohrartiger Wellenrohling (14) unter Ausbildung eines Wellenabschnitts (2) größeren Querschnitts, eines bei einem Ausgangszustand der Antriebswelle in Längsrichtung der Antriebswelle auf den Wellenabschnitt (2) größeren Querschnitts folgenden Wellenabschnitts (3) kleineren Querschnitts sowie eines zwischen dem Wellenabschnitt größeren Querschnitts und dem Wellenabschnitt kleineren Querschnitts vorgesehenen Übergangsbereichs (6) umgeformt wird,
• wobei der Übergangsbereich (6) mit einer den Wellenabschnitt (2) größeren Querschnitts und den Wellenabschnitt (3) kleineren Querschnitts miteinander verbindenden Bereichswand (7) hergestellt wird, die unter der Wirkung einer in Längsrichtung der Antriebswelle auf den Wellenabschnitt (2) größeren Querschnitts und/oder auf den Wellenabschnitt (3) kleineren Querschnitts wirkenden und die Antriebswelle ausgehend von dem Ausgangszustand stauchenden Längskraft eine Sollverformungs- und/oder eine Sollbruchstelle ausbildet,
• wobei der Wellenabschnitt (3) kleineren Querschnitts mit einer sich in Längsrichtung der Antriebswelle erstreckenden Einschublänge hergestellt wird, die bei Ausgangszustand der Antriebswelle außerhalb des Wellenabschnitts (2) größeren Querschnitts angeordnet ist und mit welcher der Wellenabschnitt (3) kleineren Querschnitts in den Wellenabschnitt (2) größeren Querschnitts bei einer Bewegung einschiebbar ist, welche der Wellenabschnitt (2) größeren Querschnitts und der Wellenabschnitt (3) kleineren Querschnitts beim Stauchen der Antriebswelle unter Verformung und/oder Bruch der Bereichswand (7) des zwischen dem Wellenabschnitt (2) größeren Querschnitts und dem Wellenabschnitt (3) kleineren Querschnitts angeordneten Übergangsbereichs (6) in Längsrichtung der Antriebswelle relativ zueinander ausführen,
**dadurch gekennzeichnet, dass** in den Wellenabschnitt (3) kleineren Querschnitts über eine Teillänge der Einschublänge eine Querschnittserweiterung (11) eingeformt wird, deren Querschnitt größer ist als der Querschnitt einer Restlänge (12) der Einschublänge des Wellenabschnitts (3) kleineren Querschnitts, die sich bei Ausgangszustand der Antriebswelle an der von dem Wellenabschnitt (2) größeren Querschnitts abliegenden Seite der Querschnittserweiterung (11) in Längsrichtung der Antriebswelle erstreckt, wobei die Querschnittserweiterung (11) derart über die Teillänge der Einschublänge des Wellenabschnitts (3) kleineren Querschnitts eingeformt wird, dass die Querschnittserweiterung (11) den Wellenabschnitt (3) kleineren Querschnitts bei der beim Stauchen der Antriebswelle ausgeführten Relativbewegung des Wellenabschnitts (2) größeren Querschnitts und des Wellenabschnitts (3) kleineren Querschnitts im Inneren des Wellenabschnitts (2) größeren Querschnitts in Bewegungsrichtung führt.

7. Verfahren nach Anspruch 6, **dadurch gekennzeichnet, dass** die Querschnittserweiterung (11) der Teillänge der Einschublänge des Wellenabschnitts (3) kleineren Querschnitts gleichzeitig mit der Herstellung des restlichen Wellenabschnitts (3) kleineren Querschnitts und/oder gleichzeitig mit der Herstellung des Übergangsbereichs (6) zwischen dem Wellenabschnitt (2) größeren Querschnitts und dem Wellenabschnitt (3) kleineren Querschnitts in den Wellenabschnitt (3) kleineren Querschnitts eingeformt wird.

8. Verfahren nach Anspruch 6 oder Anspruch 7, **dadurch gekennzeichnet, dass** der Wellenabschnitt (3) kleineren Querschnitts und/oder die Querschnittserweiterung (11) der Teillänge der Einschublänge des Wellenabschnitts (3) kleineren Querschnitts durch Rundkneten des rohrartigen Wellenrohlings (14) hergestellt wird beziehungsweise werden.

9. Verfahren nach einem der Ansprüche 6 bis 8, **dadurch gekennzeichnet, dass** der Übergangsbereich (6) zwischen dem Wellenabschnitt (2) größeren Querschnitts und dem Wellenabschnitt (3) kleineren Querschnitts mit der den Wellenabschnitt (2) größeren Querschnitts und den Wellenabschnitt (3) kleineren Querschnitts miteinander verbindenden Bereichswand (7) durch Rollieren des betreffenden Bereichs des rohrartigen Wellenrohlings (14) hergestellt wird.

## Claims

1. A drive shaft for motor vehicles, comprising shaft portions arranged one after the other in the longitudinal direction of the drive shaft, one shaft portion of which being a tubular shaft portion (2) having a larger cross section and another shaft portion being a shaft portion (3) having a smaller cross section,
• the shaft portion (2) having the larger cross section being arranged, when the drive shaft is in an initial state, on one side of an annular transition region (6) of the drive shaft and the shaft portion (3) having the smaller cross section being arranged on the other side, and the transition region (6) comprising a region wall (7) that interconnects the shaft portion (2) having the larger cross section and the shaft portion (3) having the smaller cross section,
• the shaft portion (2) having the larger cross section and the shaft portion (3) having the smaller cross section being able to move relative to one another, under the action of a longitudinal force which acts on the shaft portion (2) having the larger cross section and/or on the shaft portion (3) having the smaller cross section in the longitudinal direction of the drive shaft and compresses the drive shaft starting from the initial state, in the longitudinal direction of the drive shaft, and the region wall (7) of the transition region (6) between the shaft portion (2) having the larger cross section and the shaft portion (3) having the smaller cross section forming a predetermined deformation point and/or a predetermined breaking point,
• the shaft portion (3) having the smaller cross section comprising an insertion length which is arranged outside the shaft portion (2) having the larger cross section when the drive shaft is in the initial state and extends in the longitudinal direction of the drive shaft and by which the shaft portion (3) having the smaller cross section can be pushed into the shaft portion (2) having the larger cross section when the drive shaft is compressed, thus deforming and/or breaking the region wall (7) of the transition region (6) arranged between the shaft portion (2) having the larger cross section and the shaft portion (3) having the smaller cross section, and
**characterized in that**
the insertion length of the shaft portion (3) having the smaller cross section is provided with a cross-section widening (11) which is molded into the shaft portion (3) having the smaller cross section over a partial length of the insertion length and the cross section of which is larger than the cross section of a remaining length (12) of the insertion length of the shaft portion (3) having the smaller cross section, which remaining length extends in the longitudinal direction of the drive shaft on the side of the cross-sectional widening (11) remote from the shaft portion (2) having the larger cross section when the drive shaft is in the initial state, the shaft portion (3) having the smaller cross section being guided inside the shaft portion (2) having the larger cross section in the direction of movement by means of the cross-sectional widening (11) molded over the partial length of the insertion length into the shaft portion (3) having the smaller cross section when the shaft portion (2) having the larger cross section and the shaft portion (3) having the smaller cross section move relative to one another when the drive shaft is compressed.

2. The drive shaft according to claim 1, **characterized in that** the shaft portion (3) having the smaller cross section is tubular at least in the region of the cross-sectional widening (11) of the insertion length and comprises a portion wall which extends in the longitudinal direction of the drive shaft and into which the cross-sectional widening (11) of the insertion length of the shaft portion (3) having the smaller cross section is molded.

3. The drive shaft according to any one of the preceding claims, **characterized in that** the region wall (7) of the transition region (6) between the shaft portion (2) having the larger cross section and the shaft portion (3) having the smaller cross section is curved towards the inside of the drive shaft when the drive shaft is in the initial state.

4. The drive shaft according to any one of the preceding claims, **characterized in that** the shaft portion (2) having the larger cross section has a circular cross section having an internal diameter (D) and the cross-sectional widening (11) of the insertion length of the shaft portion (3) having the smaller diameter has a circular cross section having an external diameter (d), and **in that** the ratio of external diameter (d) of the cross-sectional widening (11) of the insertion length of the shaft portion (3) having the smaller cross section to the internal diameter (D) of the shaft portion (2) having the larger cross section is at least 0.715 and at most 0.958.

5. The drive shaft according to any one of the preceding claims, **characterized in that** the drive shaft is in the form of a jointed shaft, in particular as a Cardan shaft (1).

6. A method for manufacturing a drive shaft for motor vehicles, in which a plastically deformable tubular shaft blank (14) is formed, thus forming a shaft portion (2) having a larger cross section, a shaft portion (3) having a smaller cross section that follows the shaft portion (2) having the larger cross section in the longitudinal direction of the drive shaft when the drive shaft is in an initial state, and a transition region (6) provided between the shaft portion having the larger cross section and the shaft portion having the smaller cross section,
• the transition region (6) being produced to have a region wall (7) which interconnects the shaft portion (2) having the larger cross section and the shaft portion (3) having the smaller cross section and which forms a predetermined deformation point and/or a predetermined breaking point under the action of a longitudinal force that acts on the shaft portion (2) having the larger cross section and/or on the shaft portion (3) having the smaller cross section in the longitudinal direction of the drive shaft and compresses the drive shaft starting from the initial state, and
• the shaft portion (3) having the smaller cross section being produced to have an insertion length which extends in the longitudinal direction of the drive shaft and is arranged outside the shaft portion (2) having the larger cross section when the drive shaft is in the initial state and by which the shaft portion (3) having the smaller cross section can be pushed into the shaft portion (2) having the larger cross section in the event of a movement performed by the shaft portion (2) having the larger cross section and the shaft portion (3) having the smaller cross section relative to one another in the longitudinal direction of the drive shaft when the drive shaft is compressed, thus deforming and/or breaking the region wall (7) of the transition region (6) arranged between the shaft portion (2) having the larger cross section and the shaft portion (3) having the smaller cross section,
**characterized in that**
a cross-sectional widening (11) is molded into the shaft portion (3) having the smaller cross section over a partial length of the insertion length, the cross section of which widening is larger than the cross section of a remaining length (12) of the insertion length of the shaft portion (3) having the smaller cross section (3), which remaining length extends in the longitudinal direction of the drive shaft on the side of the cross-sectional widening (11) remote from the shaft portion (2) having the larger cross section when the drive shaft is in the initial state, the cross-sectional widening (11) being molded over the partial length of the insertion length of the shaft portion (3) having the smaller cross section in such a way that the cross-sectional widening (11) guides the shaft portion (3) having the smaller cross section inside the shaft portion (2) having the larger cross section in the direction of movement when the shaft portion (2) having the larger cross section and the shaft portion (3) having the smaller cross section move relative to one another when the drive shaft is compressed.

7. The method according to claim 6, **characterized in that** the cross-sectional widening (11) of the partial length of the insertion length of the shaft portion (3) having the smaller cross section is molded into the shaft portion (3) having the smaller cross section at the same time as the rest of the shaft portion (3) having the smaller cross section is produced and/or at the same time as the production of the transition region (6) between the shaft portion (2) having the larger cross section and the shaft portion (3) having the smaller cross section.

8. The method according to either claim 6 or claim 7, **characterized in that** the shaft portion (3) having the smaller cross section and/or the cross-sectional widening (11) of the partial length of the insertion length of the shaft portion (3) having the smaller cross section is/are produced by rotary swaging the tubular shaft blank (14).

9. The method according to any one of claims 6 to 8, **characterized in that** the transition region (6) between the shaft portion (2) having the larger cross section and the shaft portion (3) having the smaller cross section is produced to have the region wall (7) that interconnects the shaft portion (2) having the larger cross section and the shaft portion (3) having the smaller cross section by rolling the relevant region of the tubular shaft blank (14).

## Revendications

1. Arbre d'entraînement pour véhicules automobiles, comportant des sections d'arbre qui se succèdent dans la direction longitudinale de l'arbre d'entraînement, dont une section d'arbre est réalisée sous la forme d'une section d'arbre tubulaire de section transversale supérieure (2) et une autre section d'arbre est réalisée sous la forme d'une section d'arbre de section transversale inférieure (3),
• dans lequel, dans un état initial de l'arbre d'entraînement, la section d'arbre de section transversale supérieure (2) est agencée d'un côté et la section d'arbre de section transversale inférieure (3) est agencée de l'autre côté d'une zone de transition annulaire (6) de l'arbre d'entraînement, et la zone de transition (6) comporte une paroi de zone (7) reliant la section d'arbre de section transversale supérieure (2) et la section d'arbre de section transversale inférieure (3),
• dans lequel, sous l'effet d'une force longitudinale agissant, dans la direction longitudinale de l'arbre d'entraînement, sur la section d'arbre de section transversale supérieure (2) et/ou sur la section d'arbre de section transversale inférieure (3) et comprimant l'arbre d'entraînement à partir de l'état initial, la section d'arbre de section transversale supérieure (2) et la section d'arbre de section transversale inférieure (3) sont mobiles l'une par rapport à l'autre dans la direction longitudinale de l'arbre d'entraînement et la paroi de zone (7) de la zone de transition (6) entre la section d'arbre de section transversale supérieure (2) et la section d'arbre de section transversale inférieure (3) forme un point de déformation de consigne et/ou un point destiné à la rupture,
• dans lequel la section d'arbre de section transversale inférieure (3) présente, à l'état initial de l'arbre d'entraînement, une longueur d'insertion située à l'extérieur de la section d'arbre de section transversale supérieure (2) et s'étendant dans la direction longitudinale de l'arbre d'entraînement, longueur d'insertion avec laquelle la section d'arbre de section transversale inférieure (3) peut être insérée dans la section d'arbre de section transversale supérieure (2) lors d'une compression de l'arbre d'entraînement produisant une déformation et/ou une rupture de la paroi de zone (7) de la zone de transition (6) agencée entre la section d'arbre de section transversale supérieure (2) et la section d'arbre de section transversale inférieure (3),
**caractérisé en ce que,** sur une partie de sa longueur, la longueur d'insertion de la section d'arbre de section transversale inférieure (3) présente un élargissement de section transversale (11) formé dans la section d'arbre de section transversale inférieure (3), élargissement dont la section transversale est supérieure à la section transversale d'une longueur résiduelle (12) de la longueur d'insertion de la section d'arbre de section transversale inférieure (3) qui, à l'état initial de l'arbre d'entraînement, s'étend, dans la direction longitudinale de l'arbre d'entraînement, sur le côté de l'élargissement de section transversale (11) opposé à la section d'arbre de section transversale supérieure, la section d'arbre de section transversale inférieure (3) étant guidée dans la direction du mouvement à l'intérieur de la section d'arbre de section transversale supérieure (2) par l'élargissement de section transversale (11) formé dans la section d'arbre de section transversale inférieure (3) sur la portion de longueur de la longueur d'insertion lors du mouvement relatif de la section d'arbre de section transversale supérieure (2) et de la section d'arbre de section transversale inférieure (3) effectué lorsque l'arbre d'entraînement est comprimé.

2. Arbre d'entraînement selon la revendication 1, **caractérisé en ce que** la section d'arbre de section transversale inférieure (3) est de forme tubulaire au moins dans la zone d'élargissement de section transversale (11) de la longueur d'insertion, et présente une paroi de section qui s'étend dans la direction longitudinale de l'arbre d'entraînement et dans laquelle est formé l'élargissement de section transversale (11) de la longueur d'insertion de la section d'arbre de section transversale inférieure (3).

3. Arbre d'entraînement selon l'une des revendications précédentes, **caractérisé en ce que** la paroi de zone (7) de la zone de transition (6) située entre la section d'arbre de section transversale supérieure (2) et la section d'arbre de section transversale inférieure (3) est incurvée vers l'intérieur de l'arbre d'entraînement à l'état initial de celui-ci.

4. Arbre d'entraînement selon l'une des revendications précédentes, **caractérisé en ce que** la section d'arbre de section transversale supérieure (2) présente une section transversale circulaire ayant un diamètre intérieur (D) et l'élargissement de section transversale (11) de la longueur d'insertion de la section d'arbre de section transversale inférieure (3) présente une section transversale circulaire ayant un diamètre extérieur (d), et **en ce que** le rapport du diamètre extérieur (d) de l'élargissement de section transversale (11) de la longueur d'insertion de la section d'arbre de section transversale inférieure (3) au diamètre intérieur (D) de la section d'arbre de section transversale supérieure (2) est une valeur minimale de 0,715 et maximale de 0,958.

5. Arbre d'entraînement selon l'une des revendications précédentes, **caractérisé en ce que** l'arbre d'entraînement est conçu comme un arbre articulé, en particulier comme un arbre à cardan (1).

6. Procédé de fabrication d'un arbre d'entraînement pour véhicules automobiles, dans le cadre duquel un arbre tubulaire (14) brut plastiquement déformable est formée en produisant une section d'arbre de section transversale supérieure (2), une section d'arbre de section transversale inférieure (3) qui suit la section d'arbre de section transversale supérieure (2) dans un état initial de l'arbre d'entraînement en direction longitudinale de celui-ci, et une zone de transition (6) prévue entre la section d'arbre de section transversale supérieure et la section d'arbre de section transversale inférieure,
• dans lequel la zone de transition (6) est réalisée ayant une paroi de zone (7) qui relie la section d'arbre de section transversale supérieure (2) et la section d'arbre de section transversale inférieure (3) l'une à l'autre, laquelle paroi de zone forme un point de déformation de consigne et/ou un point destiné à la rupture sous l'action d'une force longitudinale agissant, dans la direction longitudinale de l'arbre d'entraînement, sur la section d'arbre de section transversale supérieure (2) et/ou sur la section d'arbre de section transversale inférieure (3) et comprimant l'arbre d'entraînement à partir de l'état initial,
• dans lequel la section d'arbre de section transversale inférieure (3) est réalisée ayant une longueur d'insertion s'étendant dans la direction longitudinale de l'arbre d'entraînement, laquelle longueur d'insertion est disposée, à l'état initial de l'arbre d'entraînement, à l'extérieur de la section d'arbre de section transversale supérieure (2) et avec laquelle la section d'arbre de section transversale inférieure (3) peut être insérée en un mouvement dans la section d'arbre de section transversale supérieure (2), lequel mouvement est effectué par la section d'arbre de section transversale supérieure (2) et la section d'arbre de section transversale inférieure (3), l'une par rapport à l'autre, dans la direction longitudinale de l'arbre d'entraînement lors de la compression de l'arbre d'entraînement produisant une déformation et/ou une rupture de la paroi de zone (7) de la zone de transition (6) agencée entre la section d'arbre de section transversale supérieure (2) et la section d'arbre de section transversale inférieure (3),
**caractérisé en ce qu'**un élargissement de section transversale (11) est formé dans la section d'arbre de section transversale inférieure (3) sur une portion de longueur de la longueur d'insertion, élargissement dont la section transversale est supérieure à la section transversale d'une longueur résiduelle (12) de la longueur d'insertion de la section d'arbre de section transversale inférieure (3) qui, à l'état initial de l'arbre d'entraînement, s'étend, dans la direction longitudinale de l'arbre d'entraînement, sur le côté de l'élargissement de section transversale (11) opposé à la section d'arbre de section transversale supérieure (2), l'élargissement de section transversale (11) étant formé sur la portion de longueur de la longueur d'insertion de la section d'arbre de section transversale inférieure (3), de sorte que l'élargissement de section transversale (11) guide la section d'arbre de section transversale inférieure (3) dans la direction du mouvement à l'intérieur de la section d'arbre de section transversale supérieure (2) lors du mouvement relatif de la section d'arbre de section transversale supérieure (2) et de la section d'arbre de section transversale inférieure (3) effectué lorsque l'arbre d'entraînement est comprimé.

7. Procédé selon la revendication 6, **caractérisé en ce que** l'élargissement de section transversale (11) de la portion de longueur de la longueur d'insertion de la section d'arbre de section transversale inférieure (3) est formé dans la section d'arbre de section transversale inférieure (3) simultanément avec la réalisation de la partie restante de la section d'arbre de section transversale inférieure (3) et/ou simultanément avec la réalisation de la zone de transition (6) entre la section d'arbre de section transversale supérieure (2) et la section d'arbre de section transversale inférieure (3).

8. Procédé selon la revendication 6 ou selon la revendication 7, **caractérisé en ce que** la section d'arbre de section transversale inférieure (3) et/ou l'élargissement de section transversale (11) de la portion de longueur de la longueur d'insertion de la section d'arbre de section transversale inférieure (3) est réalisé par forger rotatif l'arbre tubulaire brut (14).

9. Procédé selon l'une des revendications 6 à 8, **caractérisé en ce que** la zone de transition (6) entre la section d'arbre de section transversale supérieure (2) et la section d'arbre de section transversale inférieure (3) comportant la paroi de zone (7) qui relie la section d'arbre de section transversale supérieure (2) et la section d'arbre de section transversale inférieure (3) est réalisée par roulage de la zone concernée de l'arbre tubulaire brut (14).
